# EUROPÄISCHE PATENTANMELDUNG

(11) **EP 3 299 689 A1**
(43) Veröffentlichungstag der Anmeldung: **28.03.2018**
(21) Anmeldenummer: 16189836.6
(22) Anmeldetag: 21.09.2016
(51) Int. Cl.: F16L 5/04, F16L 5/02, H02G 3/04, H02G 3/22, A62C 2/06

(54) **BRANDSCHUTZBAUGRUPPE FÜR EINE LEITUNGSDURCHFÜHRUNG SOWIE VERFAHREN ZUR HERSTELLUNG EINER BRANDGESCHÜTZTEN LEITUNGSDURCHFÜHRUNG**

(71) Anmelder: HILTI Aktiengesellschaft, 9494 Schaan (LI)
(72) Erfinder: Schulz-Hanke, Wolfgang, 86836 Untermeitingen (DE); Münzenberger, Herbert, 65191 Wiesbaden (DE); Paetow, Mario, 86859 Igling (DE); Monden, Thomas, 87778 Stetten (DE)
(74) Vertreter: Hilti Aktiengesellschaft Corporate Intellectual Property

(57) **Zusammenfassung**

Ein Verfahren zur Herstellung einer brandgeschützten Leitungsdurchführung (11) durch eine Wand (12) ist beschrieben, bei dem eine Öffnung (14) in die Wand (12) eingebracht wird. Eine Leitung wird bereitgestellt, die durch die Öffnung (14) geführt werden soll. Ein flexibler, gasdichter und mattenförmiger Gewebeabschnitt (18) wird bereitgestellt, der einen Wandbefestigungsabschnitt (22) umfasst. Ein vorgesehener, intumeszierender Abschnitt (26) wird abgelängt. Der Gewebeabschnitt (18) wird abgelängt, sodass zwei entgegengesetzte Randabschnitte gebildet werden. Die Leitung wird durch die Öffnung (14) geführt. Der Gewebeabschnitt (18) wird an einem ersten, wandseitigen Ende über den Wandbefestigungsabschnitt (22) an der Wand (12) befestigt, und die entgegengesetzten Randabschnitte werden aneinandergelegt und miteinander verbunden, sodass der Gewebeabschnitt (18) einen Schlauch bildet, der die Leitung umgibt. Ferner ist eine Brandschutzbaugruppe (10) beschrieben.

## Beschreibung

Die Erfindung betrifft eine Brandschutzbaugruppe für eine Leitungsdurchführung durch eine Wand sowie ein Verfahren zur Herstellung einer brandgeschützten Leitungsdurchführung durch eine Wand.

Aus dem Stand der Technik sind Brandschutzbaugruppen für eine Leitungsdurchführung durch eine Wand bekannt, bei denen zunächst eine Öffnung in eine Wand, beispielsweise eine Decke oder eine Seitenwand, eingebracht wird, um eine oder mehrere Leitung(en) durch die entsprechende Wand zu verlegen. Unter einer Leitung ist ein Kabel, ein Rohr oder Ähnliches zu verstehen. Da die Leitung die Öffnung in der Wand nicht vollständig schließt, wird im Stand der Technik üblicherweise ein flexibles oder starres Brandschutzmaterial verwendet, um die Öffnung im Bereich der Wand, durch die die Leitung geht, vollständig zu schließen. Hierzu werden unter anderem Mörtel, PU-Steine, Acryl-Dichtmittel und/oder Mineralwolle in Kombination mit Sprühbeschichtungen verwendet.

Es hat sich jedoch herausgestellt, dass beispielsweise im Falle eines Erdbebens starke mechanische Kräfte auf die Wand wirken, die aufgrund der aufgefüllten Öffnung auf die die Wand penetrierende Leitung übertragen werden. Hierdurch können Risse im Brandschutzmaterial entstehen, mit dem die Öffnung aufgefüllt worden ist, wodurch der Brandschutz nicht mehr in dem geforderten Maße sichergestellt ist, da beispielsweise toxische Gase oder Feuer durch die Risse im Brandschutzmaterial dringen können.

Sofern weiche Materialien als Brandschutzmaterial verwendet werden, kann es bei Erdbeben bzw. allgemein Erschütterungen dazu kommen, dass sich diese weichen Materialien von der die Wand penetrierenden Leitung lösen, wodurch ebenfalls die geforderte Dichtigkeit nicht mehr gewährleistet ist.

Ferner sind Brandschutzbaugruppen bekannt, die die Leitung im Wesentlichen schlauchförmig umschließen. Diese Baugruppen können die geforderte Dichtigkeit jedoch nur in komplexer Weise sicherstellen, da bei diesen Baugruppen beispielsweise ein Brandschutzdichtmaterial zwingend erforderlich ist. Darüber hinaus ist deren Befestigung an der Wand ungeeignet, um Erschütterungen standzuhalten, wie sie im Falle eines Erdbebens auftreten. Aufgrund der üblicherweise verwendeten starren Materialien kann es zu Brüchen und Rissen in der Brandschutzbaugruppe kommen, sodass die geforderte Dichtigkeit nicht mehr gewährleistet ist.

Die Aufgabe der Erfindung ist es, eine Brandschutzbaugruppe bereitzustellen, mit der es in einfacher Weise möglich ist, die geforderte Dichtigkeit auch bei Erschütterungen dauerhaft zu gewährleisten.

Die Aufgabe wird erfindungsgemäß durch ein Verfahren zur Herstellung einer brandgeschützten Leitungsdurchführung durch eine Wand gelöst, bei dem eine Öffnung in die Wand eingebracht wird. Zudem werden eine Leitung, die durch die Öffnung geführt werden soll, sowie ein flexibler, gasdichter und mattenförmiger Gewebeabschnitt bereitgestellt, der einen Wandbefestigungsabschnitt umfasst. Ein intumeszierender Abschnitt wird bereitgestellt und abgelängt. Der Gewebeabschnitt wird abgelängt, sodass zwei entgegengesetzte Randabschnitte gebildet werden. Die Leitung wird durch die Öffnung geführt. Der Gewebeabschnitt wird an einem ersten, wandseitigen Ende über den Wandbefestigungsabschnitt an der Wand befestigt, und die entgegengesetzten Randabschnitte werden aneinandergelegt und miteinander verbunden, sodass der Gewebeabschnitt einen Schlauch bildet, der die Leitung umgibt.

Der Grundgedanke der Erfindung ist es, dass eine Leitungsdurchführung geschaffen wird, die die benötigte Gasdichtigkeit und Feuerfestigkeit auch im Falle eines Erdbebens bzw. danach sicherstellt. Bei der Herstellung der Leitungsdurchführung wird eine Brandschutzbaugruppe geschaffen, die den bei einem Erdbeben auftretenden Erschütterungen standhält und den Schwingungen teilweise folgt, ohne dass die Brandschutzbaugruppe einreißt bzw. die die Wand penetrierende Leitung der Bewegung der Wand und/oder der Brandschutzbaugruppe folgen muss. Zudem ist die Gasdichtigkeit der Brandschutzbaugruppe und somit die der Leitungsdurchführung in einfacher Weise sichergestellt, da der verwendete Gewebeabschnitt diese bereits aufweist. Des Weiteren kann die Brandschutzbaugruppe vor Ort an die gewünschten Gegebenheiten angepasst werden, da der Gewebeabschnitt und der intumeszierende Abschnitt vor Ort auf die gewünschten Maße abgelängt wird, sodass ein entsprechender Schlauch vor Ort geformt werden kann.

Ein weiterer Aspekt sieht vor, dass die Leitung mit dem Gewebeabschnitt über ein mechanisches Fixierungselement, insbesondere eine Rohrschelle, und/oder eine chemische Verbindung, insbesondere ein Brandschutzdichtmaterial, an einem zweiten Ende verbunden wird. Das mechanische Fixierungselement und/oder die chemische Verbindung werden auf der vom Wandbefestigungsabschnitt entgegengesetzten Seite der Brandschutzbaugruppe angewendet, um das dem Wandbefestigungsabschnitt entgegengesetzte Ende des Gewebeabschnitts mit der Leitung gasdicht zu verbinden. Das mechanische Fixierungselement und/oder die chemische Verbindung sind dementsprechend auf der von der Wand, durch die die Leitung geführt ist, abgewandten Seite der Brandschutzbaugruppe vorgesehen, sodass die Bewegungen der Wand im Falle eines Erdbebens nicht oder stark gedämpft im Bereich des mechanischen Fixierungselements auf die Leitung übertragen werden.

Ferner kann im Fall von mehr als einer Leitung ein Brandschutzdichtmaterial zwischen den einzelnen Leitungen aufgebracht werden, um die Gasdichtigkeit der Brandschutzbaugruppe zu verbessern, insbesondere die Hohlräume zwischen den Leitungen abzudichten.

Ein Aspekt sieht vor, dass die Öffnung in der Wand einen größeren Querschnitt als die Leitung aufweist, wodurch sich die Leitung im Falle eines Erdbebens relativ zur Wand bzw. den die Öffnung begrenzenden Rand bewegen kann. Die Leitung kann demnach innerhalb der Öffnung schwingen.

Insbesondere bleibt die Öffnung in der Wand materialfrei. Die Öffnung wird gerade nicht mit einem intumeszierenden Material bzw. einem Brandschutzmaterial aufgefüllt, wie dies im Stand der Technik vorgesehen ist, um die Gasdichtigkeit sicherzustellen. Daher können auch keine Risse in einem derartigen Material auftreten, die die Gasdichtigkeit mindern würden.

Ein weiterer Aspekt sieht vor, dass die Leitung mit einem Gleitmittel versehen wird, sodass das Gleitmittel zwischen einer Außenfläche der Leitung und einer Kontaktfläche des Gewebeabschnitts vorgesehen ist und die Leitung leichter gleiten kann. Das Gleitmittel wird insbesondere im Bereich des mechanischen Fixierungsmittels aufgetragen, sodass das entsprechende Ende der Brandschutzbaugruppe gasdicht ist und dennoch eine relative Bewegung der Leitung zur Brandschutzbaugruppe zulässt, insbesondere in Längsrichtung der Brandschutzbaugruppe.

Der Gewebeabschnitt und/oder der intumeszierende Abschnitt werden bzw. wird zunächst von einer Rolle abgerollt, insbesondere wobei der intumeszierende Abschnitt abgelängt und am Gewebeabschnitt befestigt wird. Bei dem Gewebeabschnitt und/oder dem intumeszierenden Abschnitt handelt es sich demnach um Rollenware, sodass sich der durch den Gewebeabschnitt gebildete Schlauch vor Ort an die entsprechenden Anforderungen anpassen lässt. Folglich ist eine hohe Flexibilität bei der Herstellung der brandgeschützten Leitungsdurchführung gegeben. Der abgelängte intumeszierende Abschnitt kann mit dem abgelängten Gewebeabschnitt befestigt werden, insbesondere auf dessen Innenseite aufgeklebt werden. Dementsprechend kann der intumeszierende Abschnitt als ein Brandschutzband vorliegen, das auf die Innenseite des Gewebeabschnitts aufgebracht wird.

Alternativ kann der auf der Rolle vorliegende Gewebeabschnitt den intumeszierenden Abschnitt bereits umfassen, sodass der Gewebeabschnitt samt dem daran angeordneten intumeszierenden Material des intumeszierenden Abschnitts von der Rolle abgerollt und gemeinsam auf die gewünschte Länge geschnitten wird.

Es kann ein zusätzliches Gewebematerial bereitgestellt werden, mit dem der Gewebeabschnitt im Bereich des Wandbefestigungsabschnitts verbunden wird, um einen Stabilitätsabschnitt auszubilden. Bei dem Gewebematerial handelt es sich beispielsweise um ein Glasgewebe. Im Wandbefestigungsabschnitt liegt somit eine Doppellage an Gewebematerial vor, nämlich die des zusätzlichen Gewebematerials und die des Gewebeabschnitts, mit dem das Gewebematerial verbunden ist. Sofern der Gewebeabschnitt zu einem Schlauch geformt wird, bildet der Stabilitätsabschnitt einen ringförmigen Stabilitätsabschnitt aus. Der Stabilitätsabschnitt verleiht der Brandschutzbaugruppe eine gewisse Steifigkeit und trägt gleichzeitig zur Formgebung bei, sofern das Gewebematerial zu einem Schlauch geformt wird.

Insbesondere ist das zusätzliche Gewebematerial Teil des intumeszierenden Abschnitts, der das Gewebematerial und das intumeszierende Material umfasst.

Das zusätzliche Gewebematerial kann demnach als Teil des separat ausgebildeten intumeszierenden Abschnitts abgelängt werden, um auf die gewünschten Maße gebracht zu werden.

Alternativ ist das zusätzliche Gewebematerial mit dem intumeszierenden Abschnitt bereits auf dem als Rollenware vorliegenden Gewebeabschnitt aufgebracht, sodass es gleichzeitig beim Ablängen des Gewebeabschnitts abgelängt wird.

Ferner wird die Aufgabe erfindungsgemäß durch eine Brandschutzbaugruppe für eine Leitungsdurchführung durch eine Wand gelöst, mit einem schlauchförmigen, flexiblen und gasdichten Gewebeabschnitt, der einen Wandbefestigungsabschnitt aufweist, über den die Brandschutzbaugruppe an der Wand befestigbar ist, wobei der Gewebeabschnitt derart ausgebildet ist, dass der Gewebeabschnitt die durch die Wand geführte Leitung umschließt, und wobei der Wandbefestigungsabschnitt einen intumeszierenden Abschnitt aufweist, der direkt mit dem Gewebeabschnitt verbunden ist. Die durch die Wand geführte Leitung ist demnach nicht starr mit der Brandschutzbaugruppe verbunden, sodass eine relative Bewegung zwischen der Leitung und der Brandschutzbaugruppe im Falle eines Erdbebens möglich ist. Da der Gewebeabschnitt darüber hinaus flexibel ausgebildet ist, kann die Brandschutzbaugruppe gewissen Erschütterungen standhalten und entsprechenden Bewegungen der Wand folgen, ohne zu brechen oder einzureißen. Die geforderte Gasdichtigkeit der Brandschutzbaugruppe ist zudem gewährleistet, da der intumeszierende Abschnitt direkt mit dem gasdichten Gewebeabschnitt verbunden ist. Der Gewebeabschnitt hat zudem einen hohen Feuerwiderstand, weswegen der Gewebeabschnitt auch im Brandfall gasdicht ist.

Die Brandschutzbaugruppe und somit die Leitungsdurchführung weisen demnach die geforderten Brandschutzeigenschaften wie Gasdichtigkeit, Feuerbeständigkeit und Intumeszenz auf.

Gemäß einem Aspekt weist der Wandbefestigungsabschnitt einen ringförmigen Stabilitätsabschnitt auf, insbesondere wobei ein zusätzliches Gewebematerial vorgesehen ist. Der ringförmige Stabilitätsabschnitt stellt die Formgebung des Schlauchs sicher, wobei er die Stabilität im Bereich des Wandbefestigungsabschnitts erhöht. Der ringförmige Stabilitätsabschnitt kann unter anderem durch eine zusätzliche Lage Gewebematerial gebildet sein, sodass der Bereich verstärkt ist, in dem das intumeszierende Material des intumeszierenden Abschnitts angeordnet ist. Das Gewebematerial kann ein Glasgewebe und/oder Teil des intumeszierenden Abschnitts sein. In einfacher Weise ist das Glasgewebe auf den Gewebeabschnitt aufgeklebt.

Der ringförmige Stabilitätsabschnitt und der flexible Gewebeabschnitt stellen vorzugsweise die benötigte Stabilität und die gewünschte Flexibilität der Brandschutzbaugruppe sicher, sodass die mechanischen Belastungen bei einem Erdbeben keine Auswirkungen auf die Funktionsfähigkeit der Brandschutzbaugruppe haben.

Insbesondere kann zusätzlich eine Silikonmasse im Verbindungsbereich des Gewebematerials vorgesehen sein. Die zusätzliche Silikonmasse verbessert die Gasdichtigkeit der Brandschutzbaugruppe im Verbindungsbereich zwischen dem Gewebeabschnitt und dem Gewebematerial.

Vorzugsweise ist der intumeszierende Abschnitt als innenliegende Einlage im Wandbefestigungsabschnitt angeordnet. Das intumeszierende Material des intumeszierenden Abschnitts bläht sich somit nach innen auf, sofern es bei einem Brand den hohen Temperaturen ausgesetzt ist. Das intumeszierende Material kann sich dabei so weit nach innen ausdehnen, dass es die Öffnung in der angrenzenden Wand verschließt, durch die die Leitung geführt ist, und/oder den schlauchförmigen Gewebeabschnitt verschließt bzw. verstopft, sodass kein Gas und auch kein Feuer durch die Leitungsdurchführung übertreten kann.

Der Gewebeabschnitt kann aus einem Material bestehen, dass sich bei hohen Temperaturen zusammenzieht. Der Gewebeabschnitt, der die Leitung und das intumeszierende Material des intumeszierenden Abschnitts schlauchförmig umgibt, stellt demnach eine Art Schrumpfschlauch dar. Die Brandschutzbaugruppe verschließt die Durchführung im Brandfall so noch schneller, um einen Übertritt von Feuer und/oder toxischen Gasen zu verhindern.

Ferner kann der Gewebeabschnitt eine Matte sein, deren entgegengesetzte Randabschnitte zur Bildung des Schlauchs aneinander befestigt worden sind. Die beiden Randabschnitte können dabei über ein Verschlusssystem miteinander verschlossen werden, das zwei Verschlusselemente aufweist, die jeweils an einem Randabschnitt befestigt sind. Anschließend können die beiden Verschlusselemente miteinander gekoppelt werden, insbesondere verhakt werden, um so den Verschluss des mattenförmigen Gewebeabschnitts zu gewährleisten.

Ein weiterer Aspekt sieht vor, dass der Wandbefestigungsabschnitt wenigstens ein Befestigungsteil aufweist, das zumindest teilweise flächig an der Wand anliegt, insbesondere wobei das Befestigungsteil ein im Wesentlichen rechtwinkliger Befestigungshaken ist. Die zumindest teilweise flächige Anlage des Befestigungsteils stellt sicher, dass die auftretenden mechanischen Kräfte verhältnismäßig großflächig in die Befestigungselemente eingeleitet werden, wodurch die Krafteinleitung homogener ist. Hierdurch ist eine dauerhafte und sichere Befestigung der Brandschutzbaugruppe gewährleistet.

Insbesondere steht das Befestigungsteil vom ringförmigen Stabilitätsabschnitt in der Befestigungsebene an der Wand im Wesentlichen radial ab. Hierdurch ist eine kompakte Befestigung der Brandschutzbaugruppe an der Wand möglich. Zusätzlich stützt das Befestigungsteil den ringförmigen Stabilitätsabschnitt und somit die gesamte Brandschutzbaugruppe ab.

Bei dem Befestigungsteil kann es sich um ein separates Element handeln, das mit dem ringförmigen Stabilitätsabschnitt verbunden wird. Alternativ oder ergänzend kann das Befestigungsteil den ringförmigen Stabilitätsabschnitt umgreifen und somit einklemmen.

Gemäß einem weiteren Aspekt ist der Wandbefestigungsabschnitt derart ausgebildet, dass zumindest zwischen einer Innenseite des Wandbefestigungsabschnitts und der umschlossenen Leitung ein Freiraum ausgebildet ist, der eine relative Bewegung der Leitung ermöglicht. Die Brandschutzbaugruppe weist im Bereich des Wandbefestigungsabschnitts in einer zur Wand parallelen Ebene einen größeren Querschnitt als die Leitung auf, sodass in der entsprechenden Ebene ein im Wesentlichen ringförmiger Freiraum zwischen der Innenseite des Wandbefestigungsabschnitts und der Leitung gebildet ist, die eine relative Schwingung der Leitung zur Brandschutzbaugruppe in Leitungsrichtung ermöglicht.

Insbesondere weist der Gewebeabschnitt ein Gewebematerial auf, das Aluminium, Aramid, Glasfaser, Silicafaser und/oder Keramikfaser umfasst, insbesondere wobei der Gewebeabschnitt aus einem Silikon-Glasgewebe gebildet ist. Das Glasgewebe sorgt für die Temperatur- und Feuerbeständigkeit, wohingegen das Silikon die geforderte Gasdichtigkeit bereitstellt. Der Gewebeabschnitt ist trotz dieser Brandschutz-Eigenschaften flexibel, sodass er bei Schwingungen und Erschütterungen nicht einreißt. Es kann zudem Teflon (PTFE) oder ein anderes geeignetes Material alternativ oder ergänzend zum Silikon genutzt werden, um die Gasdichtigkeit bereitzustellen.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine perspektivische Ansicht einer erfindungsgemäßen Brandschutzbaugruppe,
- Figur 2 eine Schnittdarstellung der erfindungsgemäßen Baugruppe aus Figur 1, und
- Figur 3 den Gewebeabschnitt samt intumeszierenden Abschnitt der erfindungsgemäßen Baugruppe im abgelängten Zustand.

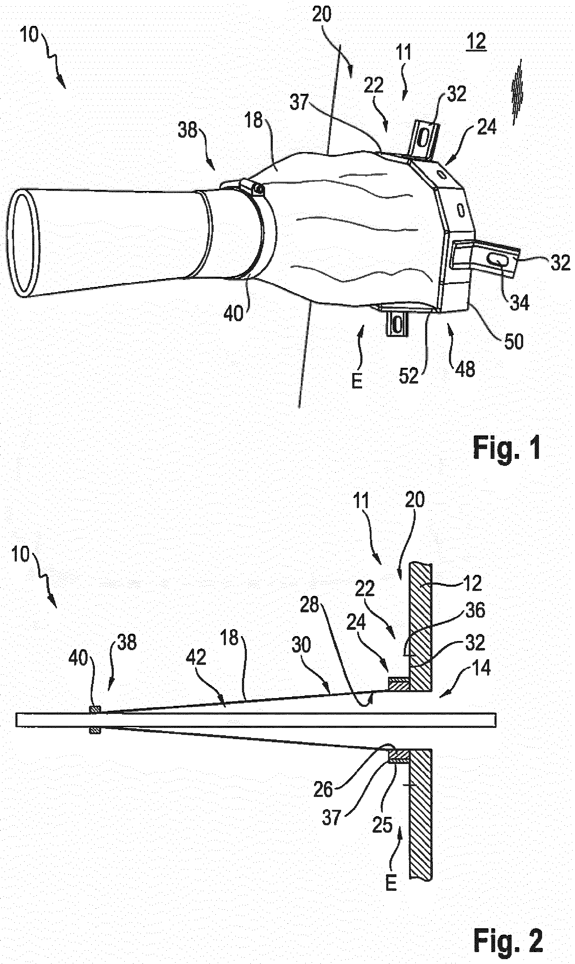

In den Figuren 1 und 2 ist eine Brandschutzbaugruppe 10 für eine Leitungsdurchführung 11 durch eine Wand 12 gezeigt, die eine Öffnung 14 aufweist, durch die eine Leitung 16 bzw. ein Rohr geführt ist.

Mit der Brandschutzbaugruppe 10 wird verhindert, dass toxische Gase und/oder Feuer im Brandfall von einer Seite der Wand 12 über die Leitungsdurchführung 11 auf die andere Seite der Wand 12 gelangen. Es wird also ein Übertritt des Brands von einem Raum zu einem anderen Raum verhindert, die durch die Wand 12 voneinander getrennt sind.

Die Brandschutzbaugruppe 10 bzw. die Leitungsdurchführung 11 weisen hierzu die Brandschutzeigenschaften wie Feuerfestigkeit, Gasdichtigkeit und Intumeszenz auf.

Die Brandschutzbaugruppe 10 umfasst einen schlauchförmigen Gewebeabschnitt 18, der gasdicht und flexibel ausgebildet ist, wobei der Gewebeabschnitt 18 die durch die Öffnung 14 geführte Leitung 16 umschließt.

Zudem weist die Brandschutzbaugruppe 10 an einem ersten Ende 20 einen Wandbefestigungsabschnitt 22 auf, über den die Brandschutzbaugruppe 10 an der Wand 12 befestigt ist.

Der Wandbefestigungsabschnitt 22 ist unter anderem durch die dem ersten Ende 20 zugewandte Seite des Gewebeabschnitts 18 gebildet, in dessen Bereich ein ringförmiger Stabilitätsabschnitt 24 vorhanden ist. Über den ringförmigen Stabilitätsabschnitt 24 ist die Brandschutzbaugruppe 10 an der Wand 12 befestigt. Der ringförmige Stabilitätsabschnitt 24 dient demnach dazu, der flexibel ausgebildeten Brandschutzbaugruppe 10 eine gewisse Stabilität zu verleihen, sodass diese positionsgetreu an der Wand 12 befestigt werden kann.

In der gezeigten Ausführungsform umfasst der ringförmige Stabilitätsabschnitt 24 unter anderem ein zusätzliches Gewebematerial 25, beispielsweise ein Glasgewebe, das mit dem Gewebeabschnitt 18 verbunden ist, beispielsweise aufgeklebt ist.

Über das zusätzliche Gewebematerial 25 ist somit eine Doppellage im Wandbefestigungsabschnitt 22 bereitgestellt. Der ringförmige Stabilitätsabschnitt 24 umfasst also eine Lage des Gewebeabschnitts 18 und eine Lage des zusätzlichen Gewebematerials 25. Der ringförmige Stabilitätsabschnitt 24 kann auch als eine Manschette bezeichnet werden.

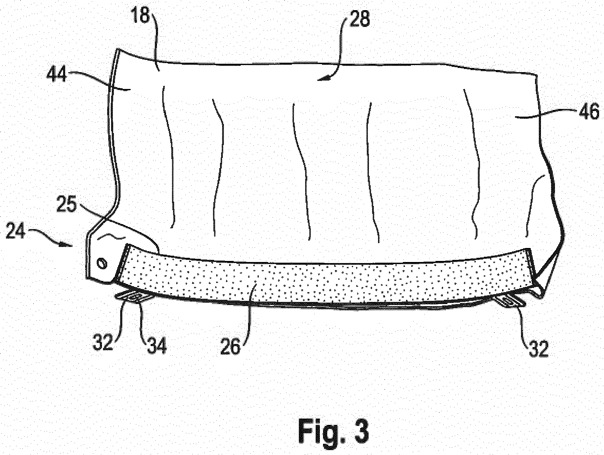

Zudem weist der Gewebeabschnitt 18 intumeszierendes Material auf, das zusammen mit dem Gewebematerial 25 in der gezeigten Ausführungsform einen intumeszierenden Abschnitt 26 bildet, der auf der Innenseite 28 des Gewebeabschnitts 18 angeordnet ist, insbesondere im Bereich des Wandbefestigungsabschnitts 22 (siehe Figuren 2 und 3).

Bei dem intumeszierenden Abschnitt 26 handelt es sich demnach um eine innenliegende Einlage. Der intumeszierende Abschnitt 26 ist folglich direkt mit dem Gewebeabschnitt 18 verbunden.

Zur Verbesserung der Gasdichtigkeit der Brandschutzbaugruppe 10 kann eine zusätzliche Silikonmasse im Verbindungsbereich des Gewebematerials 25 und des Gewebeabschnitts 18 vorgesehen sein.

An der Außenseite 30 des Wandbefestigungsabschnitts 22, insbesondere des ringförmigen Stabilitätsabschnitts 24, sind Befestigungsteile 32 in Form von rechtwinkligen Befestigungshaken vorgesehen, über die sich die Brandschutzbaugruppe 10, insbesondere der Wandbefestigungsabschnitt 22, an der Wand 12 befestigen lässt.

Hierzu weisen die Befestigungsteile 32 jeweils zumindest eine Öffnung 34 in Form eines Langlochs auf (siehe Figur 1), durch die sich ein Befestigungselement 36 wie eine Schraube erstreckt (siehe Figur 2), um die Brandschutzbaugruppe 10 an der Wand 12 zu befestigen.

Wie aus der Figur 1 insbesondere hervorgeht, sind die Befestigungsteile 32 über den Umfang des Wandbefestigungsabschnitts 22 verteilt, sodass die auf die Brandschutzbaugruppe 10 wirkenden Kräfte homogen verteilt werden. Dies erhöht die Stabilität der Befestigung der Brandschutzbaugruppe 10, insbesondere im Falle eines Erdbebens und den damit einhergehenden Erschütterungen der Wand 12.

Die Befestigungsteile 32 sind als separate Teile ausgebildet, die beispielsweise aus einem Metall bestehen, insbesondere aus einem Blech.

Da die Befestigungsteile 32 rechtwinklig ausgebildet sind, ist sichergestellt, dass die Befestigungsteile 32 zumindest teilweise im Wesentlichen radial vom Wandbefestigungsabschnitt 22 in einer Befestigungsebene E abstehen, die der Oberfläche der Wand 12 entspricht. Die Befestigungsteile 32 liegen in der Befestigungsebene E flächig an der Wand 12 an, wodurch eine kompakte Befestigung der Brandschutzbaugruppe 10 an der Wand 12 möglich ist.

Zudem weisen die Befestigungsteile 32 eine Abkantung 37 auf, über die der als Einlage ausgebildete intumeszierende Abschnitt 26 positionsgetreu gehalten ist und gegen die Wand 12 gedrückt wird, wenn die Brandschutzbaugruppe 10 an der Wand 12 befestigt ist.

Darüber hinaus weist die Brandschutzbaugruppe 10 in der gezeigten Ausführungsform an einem zweiten Ende 38, das zum ersten Ende 20 entgegengesetzt ist, ein mechanisches Fixierungselement 40 in Form einer Rohrschelle auf, über die der Gewebeabschnitt 18 an der Leitung 16 gasdicht befestigt ist.

Alternativ oder ergänzend kann eine chemische Verbindung vorgesehen sein, um den Gewebeabschnitt 18 im Bereich des zweiten Endes 38 mit der Leitung 16 gasdicht zu koppeln, beispielsweise ein Brandschutzdichtmaterial.

Das Brandschutzdichtmaterial kann insbesondere zwischen einzelnen Leitungen vorgesehen sein, sofern mehrere Leitungen durch die Öffnung 14 geführt werden. Dadurch werden die Hohlräume zwischen den einzelnen Leitungen abgedichtet.

Zudem ist in der gezeigten Ausführungsform ein Gleitmittel auf der Außenfläche der Leitung 16 im Bereich des zweiten Endes 38 aufgebracht, was entsprechend zwischen der Außenfläche und einer Kontaktfläche des Gewebeabschnitts 18 wirkt. Das Gleitmittel stellt sicher, dass sich die Leitung 16 in Längsrichtung bzw. in axialer Richtung, also in Leitungsrichtung, relativ zur Befestigungsbaugruppe 10 bewegen kann. Die Leitung 16 ist somit nicht in alle Bewegungsrichtungen am zweiten Ende 38 mit dem Gewebeabschnitt 18 über das Fixierungselement 40 fixiert. Das Fixierungselement 40 und das Gleitmittel stellen die benötigte Gasdichtigkeit sicher. Bei dem Gleitmittel kann es sich um ein Schmiermittel handeln, beispielsweise ein Fett.

Insbesondere aus Figur 2 geht hervor, dass zwischen der die Innenseite 28 definierenden Innenwandung des Wandbefestigungsabschnitts 22 bzw. des Gewebeabschnitts 18 sowie der vom Gewebeabschnitt 18 umschlossenen Leitung 16 ein Freiraum 42 ausgebildet wird, der gewährleistet, dass sich die Leitung 16 auch in radialer Richtung relativ zur Brandschutzbaugruppe 10 bewegen kann.

Bei einem Erdbeben ist so sichergestellt, dass eine relative Bewegung der Leitung 16 zur Brandschutzbaugruppe 10 in sämtlichen Richtungen zumindest in bestimmten Grenzen möglich ist.

Der schlauchförmige Gewebeabschnitt 18 erstreckt sich im Wesentlichen konisch zulaufend vom ersten Ende 20 zum zweiten Ende 38, sodass der Querschnitt des Freiraums 42, in dieser Richtung gesehen, ebenfalls kleiner wird.

Darüber hinaus geht aus der Figur 2 hervor, dass die Öffnung 14 in der Wand 12 einen größeren Durchmesser als die Leitung 16 selbst hat, wodurch sichergestellt ist, dass sich die Leitung 16 relativ zur Wand 12 bewegen kann. Dies liegt auch daran, dass die Öffnung 14 nicht mit einem Brandschutzmaterial oder einem intumeszierenden Material aufgefüllt worden ist, wie dies ansonsten üblich ist.

Der Gewebeabschnitt 18 ist, wie bereits beschrieben, flexibel, gasdicht und feuerfest. Um diese Eigenschaften zu gewährleisten, weist der Gewebeabschnitt 18 ein Silikon-Glasgewebe auf bzw. ist der Gewebeabschnitt 18 aus diesem gebildet. Alternativ oder ergänzend kann der Gewebeabschnitt 18 ein Gewebe mit Aramid, Silica- oder Keramikfasern und/oder Aluminium umfassen. Anstelle des Silikons kann Teflon (PTFE) oder ein anderes geeignetes Material genutzt werden, um die Gasdichtigkeit bereitzustellen. Dieses Material kann auch ergänzend zum Silikon verwendet werden.

Sofern ein Brand auf der in Figur 2 rechten Seite der Wand 12 ausbricht, bläht sich das intumeszierende Material des intumeszierenden Abschnitts 26 aufgrund der steigenden Temperatur auf. Dabei wird die Brandschutzbaugruppe 10, insbesondere der schlauchförmige Gewebeabschnitt 18, und/oder die Öffnung 14 in der Wand 12, durch die die Leitung 16 geführt ist, vom aufgeblähten intumeszierende Material verschlossen.

Sofern der Brand auf der entgegengesetzten Seite, also in Figur 2 auf der linken Seite ausbricht, zieht sich der Gewebeabschnitt 18 vorzugsweise in analoger Weise zu einem Schrumpfschlauch zusammen, um die Leitung 16 eng zu umschließen. Die Gasdichtigkeit der Leitungsdurchführung 11 ist so gewährleistet. Sobald die Temperatur am ersten Ende 20 auf eine vorbestimmte Temperatur ansteigt, bläht sich das intumeszierende Material auf, sodass die Öffnung 14 und/oder der schlauchförmige Gewebeabschnitt 18 verschlossen werden.

Weder Feuer noch toxische Gase können so von einer Seite der Wand 12 auf die andere Seite der Wand 12 übertreten, insbesondere nicht durch die Öffnung 14, unabhängig davon, auf welcher Seite der Brand ausbricht.

Zur Herstellung der brandgeschützten Leitungsdurchführung 11 wird zunächst die Öffnung 14 in die Wand 12 eingebracht, durch die anschließend die Leitung 16 gelegt werden soll.

Anschließend kann der Gewebeabschnitt 18 von einer Rolle abgerollt und entsprechend der Öffnung 14 abgelängt werden. Hierbei entstehen zwei Randabschnitte 44, 46 (siehe Figur 3). Der Gewebeabschnitt 18 liegt dann als Matte vor.

Der intumeszierende Abschnitt 26 mit dem (optional) zusätzlichen Gewebematerial 25 wird von einer Rolle abgerollt und entsprechend abgelängt. Der intumeszierende Abschnitt 26 kann dann auf die Innenseite 28 des mattenförmig vorliegenden Gewebeabschnitts 18 im Wandbefestigungsabschnitt 22 aufgebracht werden, um den Stabilitätsabschnitt 24 auszubilden und die Intumeszenz-Eigenschaften bereitzustellen. Der intumeszierende Abschnitt 26 kann als ein Brandschutzband auf einer Rolle vorliegen, die beispielsweise selbstklebend ausgebildet ist, sodass der intumeszierende Abschnitt 26 in einfacher Weise auf den Gewebeabschnitt 18 aufgeklebt wird.

Alternativ ist der intumeszierende Abschnitt 26 bereits am aufgerollten Gewebeabschnitt 18 befestigt, sodass beide gleichzeitig abgerollt und abgelängt werden.

Der mattenförmige Gewebeabschnitt 18 mit dem direkt daran befestigten intumeszierenden Abschnitt 26 wird anschließend zu einem Schlauch geformt, wie dies in Figur 1 gezeigt ist, wobei die beiden Randabschnitte 44, 46 miteinander befestigt werden, um den Schlauch auszubilden.

Hierzu wird ein Verschlusssystem 48 verwendet, das zwei Verschlusselemente 50, 52 aufweist, die an den entsprechenden Randabschnitten 44, 46 vorgesehen sind (siehe Figur 1). Die beiden Verschlusselemente 50, 52 können miteinander verhakt werden, um die beiden Randabschnitte 44, 46 in einfacher Weise miteinander zu verbinden.

Im Bereich der miteinander verbundenen Randabschnitte 44, 46 kann zusätzlich eine Silikonmasse aufgebracht werden, um den Verbindungsbereich abzudichten, sodass die gewünschte Gasdichtigkeit sichergestellt ist.

Die Brandschutzbaugruppe 10, insbesondere der Gewebeabschnitt 18, wird dann über den Wandbefestigungsabschnitt 22 an der Wand 12 im Bereich der Öffnung 14 befestigt. Hierzu werden die als Befestigungshaken ausgebildeten Befestigungsteile 32 an der Wand 12 und am ringförmigen Stabilitätsabschnitt 24 befestigt.

Die Abkantung 37 der Befestigungsteile 32 drückt dabei den am Gewebeabschnitt 18 direkt befestigten intumeszierenden Abschnitt 26 gegen die Wand 12, sodass dieser in Position gehalten wird.

Alternativ kann auch zunächst die Brandschutzbaugruppe 10 im Wandbefestigungsabschnitt 22 mit der Wand 12 befestigt werden und dann die Randabschnitte 44, 46 miteinander verbunden werden, um den Schlauch auszubilden.

Anschließend wird die durch die Wand 12 zu führende Leitung 16 durch die Brandschutzbaugruppe 10 und die Öffnung 14 geführt, wonach der Gewebeabschnitt 18 über sein zweites Ende mit der Leitung 16 verbunden wird, beispielsweise über das mechanische Fixierungselement 40 wie der Rohrschelle. Zusätzlich oder alternativ kann eine chemische Verbindung in Form eines Brandschutzdichtmaterials aufgebracht werden.

Alternativ kann die Leitung 16 auch direkt verlegt werden, sodass der Gewebeabschnitt 18 nachträglich um die bereits verlegte Leitung 16 gelegt wird und seine Randabschnitte 44, 46 miteinander verbunden werden, um den Schlauch auszubilden.

Der Gewebeabschnitt 18 und/oder der intumeszierende Abschnitt 26 liegen bzw. liegt also als Rollenware vor, sodass sich die Brandschutzbaugruppe 10 vor Ort auf die gewünschte Größe ablängen lässt. Sofern der aufgerollte Gewebeabschnitt 18 bereits den intumeszierenden Abschnitt 26 umfasst, können beide gleichzeitig abgelängt werden.

Da die Öffnung 14 in der Wand 12 bei der Herstellung der brandgeschützten Leitungsdurchführung 11 mittels der Brandschutzbaugruppe 10 materialfrei bleibt, ist sichergestellt, dass keine Einrisse oder Beschädigungen des intumeszierenden Materials bzw. des Brandschutzmaterials im Falle eines Erdbebens auftreten. Dementsprechend lässt sich die geforderte Gasdichtigkeit der Brandschutzbaugruppe 10 während eines Erdbebens und nach einem Erdbeben gewährleisten.

Die Leitung 16 kann sich sowohl frei in der Öffnung 14 der Wand 12 als auch relativ zur Brandschutzbaugruppe 10 innerhalb des flexiblen Gewebeabschnitts 18 bewegen.

Die Gasdichtigkeit, der Feuerwiderstand sowie die intumeszierenden Eigenschaften der Brandschutzbaugruppe 10 sind demnach in kostengünstiger Weise sichergestellt, wobei die Brandschutzbaugruppe 10 auch noch bei bzw. nach einem Erdbeben voll funktionsfähig ist.

## Patentansprüche

1. Verfahren zur Herstellung einer brandgeschützten Leitungsdurchführung (11) durch eine Wand (12), mit den folgenden Schritten:
a) eine Öffnung (14) wird in die Wand (12) eingebracht,
b) eine Leitung (16) wird bereitgestellt, die durch die Öffnung (14) geführt werden soll,
c) ein flexibler, gasdichter und mattenförmiger Gewebeabschnitt (18) wird bereitgestellt, der einen Wandbefestigungsabschnitt (22) umfasst,
d) ein intumeszierender Abschnitt (26) wird bereitgestellt und abgelängt,
e) zumindest der Gewebeabschnitt (18) wird abgelängt, sodass zwei entgegengesetzte Randabschnitte (44, 46) gebildet werden,
f) die Leitung (16) wird durch die Öffnung (14) geführt,
g) der Gewebeabschnitt (18) wird an einem ersten, wandseitigen Ende über den Wandbefestigungsabschnitt (22) an der Wand (12) befestigt, und
h) die entgegengesetzten Randabschnitte (44, 46) werden aneinandergelegt und miteinander verbunden, sodass der Gewebeabschnitt (18) einen Schlauch bildet, der die Leitung (16) umgibt.

2. Verfahren nach Anspruch 1, **dadurch gekennzeichnet, dass** die Leitung (16) mit dem Gewebeabschnitt (18) über ein mechanisches Fixierungselement (40), insbesondere eine Rohrschelle, und/oder eine chemische Verbindung, insbesondere ein Brandschutzdichtmaterial, an einem zweiten Ende (38) verbunden wird.

3. Verfahren nach Anspruch 1 oder 2, **dadurch gekennzeichnet, dass** die Öffnung (14) in der Wand (12) einen größeren Querschnitt als die Leitung (16) aufweist.

4. Verfahren nach einem der vorhergehenden Ansprüche, **dadurch gekennzeichnet, dass** die Öffnung (14) in der Wand (12) materialfrei bleibt.

5. Verfahren nach einem der vorhergehenden Ansprüche, **dadurch gekennzeichnet, dass** die Leitung (16) mit einem Gleitmittel versehen wird, sodass das Gleitmittel zwischen einer Außenfläche der Leitung (16) und einer Kontaktfläche des Gewebeabschnitts (18) vorgesehen ist und die Leitung (16) leichter gleiten kann.

6. Verfahren nach einem der vorhergehenden Ansprüche, **dadurch gekennzeichnet, dass** der Gewebeabschnitt (18) und/oder der intumeszierende Abschnitt (26) zunächst von einer Rolle abgerollt werden bzw. wird, insbesondere wobei der intumeszierende Abschnitt (26) abgelängt und am Gewebeabschnitt (18) befestigt wird.

7. Verfahren nach einem der vorhergehenden Ansprüche, **dadurch gekennzeichnet, dass** ein zusätzliches Gewebematerial (25) bereitgestellt wird, mit dem der Gewebeabschnitt (18) im Bereich des Wandbefestigungsabschnitts (22) verbunden wird, um einen Stabilitätsabschnitt (24) auszubilden.

8. Brandschutzbaugruppe (10) für eine Leitungsdurchführung (11) durch eine Wand (12), mit einem schlauchförmigen, flexiblen und gasdichten Gewebeabschnitt (18), der einen Wandbefestigungsabschnitt (22) aufweist, über den die Brandschutzbaugruppe (10) an der Wand (12) befestigbar ist, wobei der Gewebeabschnitt (18) derart ausgebildet ist, dass der Gewebeabschnitt (18) die durch die Wand (12) geführte Leitung (16) umschließt, und wobei der Wandbefestigungsabschnitt (22) einen intumeszierenden Abschnitt (26) aufweist, der direkt mit dem Gewebeabschnitt (18) verbunden ist.

9. Brandschutzbaugruppe (10) nach Anspruch 8, **dadurch gekennzeichnet, dass** der Wandbefestigungsabschnitt (22) einen ringförmigen Stabilitätsabschnitt (24) aufweist, insbesondere wobei ein zusätzliches Gewebematerial (25) vorgesehen ist.

10. Brandschutzbaugruppe (10) nach einem der Ansprüche 8 oder 9, **dadurch gekennzeichnet, dass** der intumeszierende Abschnitt (26) als innenliegende Einlage im Wandbefestigungsabschnitt (22) angeordnet ist.

11. Brandschutzbaugruppe (10) einem der Ansprüche 8 bis 10, **dadurch gekennzeichnet, dass** der Gewebeabschnitt (18) eine Matte ist, deren entgegengesetzte Randabschnitte (44, 46) zur Bildung des Schlauchs aneinander befestigt sind.

12. Brandschutzbaugruppe (10) nach einem der Ansprüche 8 bis 11, **dadurch gekennzeichnet, dass** der Wandbefestigungsabschnitt (22) wenigstens ein Befestigungsteil (32) aufweist, das zumindest teilweise flächig an der Wand (12) anliegt, insbesondere wobei das Befestigungsteil (32) ein im Wesentlichen rechtwinkliger Befestigungshaken ist.

13. Brandschutzbaugruppe (10) nach Anspruch 12, **dadurch gekennzeichnet, dass** das Befestigungsteil (32) von einem ringförmigen Stabilitätsabschnitt (24) in der Befestigungsebene (E) an der Wand (12) im Wesentlichen radial absteht.

14. Brandschutzbaugruppe (10) nach einem der Ansprüche 8 bis 13, **dadurch gekennzeichnet, dass** der Wandbefestigungsabschnitt (22) derart ausgebildet ist, dass zumindest zwischen einer Innenseite (28) des Wandbefestigungsabschnitts (22) und der umschlossenen Leitung (16) ein Freiraum (42) ausgebildet ist, der eine relative Bewegung der Leitung (16) ermöglicht.

15. Brandschutzbaugruppe (10) nach einem der Ansprüche 8 bis 14, **dadurch gekennzeichnet, dass** der Gewebeabschnitt (18) ein Gewebematerial aufweist, das Aluminium, Aramid, Glasfaser, Silicafaser und/oder Keramikfaser aufweist, insbesondere wobei der Gewebeabschnitt (18) aus einem Silikon-Glasgewebe gebildet ist.
